# EUROPEAN PATENT APPLICATION

(11) **EP 1 926 265 A1**
(43) Date of publication of application: **28.05.2008**
(21) Application number: 06301164.7
(22) Date of filing: 21.11.2006
(51) Int. Cl.: H04L 12/58

(54) **Method preventing spam in mobile communications**

(71) Applicant: GEMPLUS, 13420 Gémenos (FR)
(72) Inventor: Feyt, Nathalie Gemplus, 13780, Cuges les Pins (FR)

(57) **Abstract**

The method for preventing spam for mobile communication includes scrambling the end-user's identity so that an application server SS1 cannot find back the said identity and then cannot spam the end-user U and/or sell his identity.

The method further includes using an intermediary server DS1 in charge of the scrambling of the end-user's identity for the purpose of saving anonymity of the said end-user U. The necessary softwares thereon are also disclosed. A personal token CP of the device T is also disclosed.

## Description

### TECHNICAL FIELD

This invention relates to a method and a device for preventing spam in mobile communications. More particularly, the invention relates to a method and a device for allowing the end-user of the device to prevent from spam in a way adapted to mobile devices.

### BACKGROUND

Sending SMS (Short Message Services) or connecting to dedicated servers (ring tone, games, chat group...) let trace of the mobile phone number (MSISDN in GSM (Global System for Mobile Communications) standard) which is a direct access to the end-user. Then the end-user suffers from junk messages, and the communication network operators suffer from a useless overcrowding of the network, coming from fraudulent servers using then such mobile phone number to do frauds such as one-ring fraud or simple request to call a number fraud.

Currently, it is possible to prevent from spam putting undesirable addresses in a dedicated file of the device, known as black list as disclosed by DE102004054900 in the Internet world. This black list can be sent by the communication network operator to the device and then updated by the communication network operator or by the end-user. For example, every week, depending on predefined rules, the communication network operator updates the black list and sends it to all the devices corresponding to his end-users' database. This solution does not ensure the end-user to have an up-to-date black list. Such lists are often very huge so there is a need of big memories into the device. Another possibility is that the end-user of the device can memorize undesirable addresses when receiving Spam SMS in order to filter and then avoid new reception of messages coming from those addresses.

### DESCRIPTION OF THE INVENTION

The invention proposes a spam preventing solution based on a new concept excluding the need of a black list that is not a good solution for small devices such as personal tokens.

The solution exposed in this application authorises the answer from the service provider even if it's based on the phone number impersonality and anonymity rather than phone number.

Other purposes, benefits and aspects of the invention will appear through the following description, which is made in reference to the appended figures.

### BRIEF DESCRIPTION OF DRAWINGS

The invention will be better understood with reference to the drawings, in which:

Figure 1 is a schematic drawing showing a system including a mobile station operable in a radio communication network, and a first and a second servers operating in this network, without the invention;

Figure 2 is a schematic drawing showing a system including a mobile station operable in a radio communication network, and a first and a second servers operating in this network, according to the preferred method implementing the invention disclosed in this application, allowing the sending of an SMS to a first server making sure the said server cannot access the identity of the end-user for spam according to one embodiment of the invention; and

Figure 3 is a detailed drawing of the mobile station shown in Figure 2, the mobile station including a mobile terminal and a subscriber identity module (SIM).

### DETAILED DESCRIPTION OF THE EMBODIMENTS

As shown in the drawings for purposes of illustration, the invention is embodied in a method in order to respect anonymity of the end-user when sending messages so that servers cannot use later on the end-user's identity for spam but server can answer in case of need to the said end-user.

### DETAILED DESCRIPTION OF THE DRAWINGS

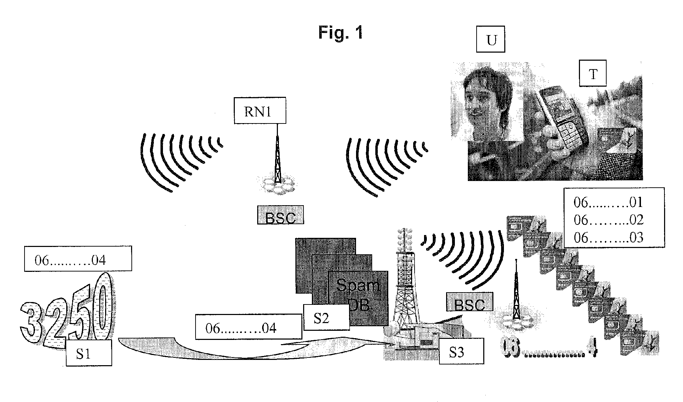

Figure 1 shows a communication network, such as a Global System for Mobile communications (GSM) network RN1. The GSM network RN1 includes network element nodes and a mobile station T and the associated smart token CP. The network element nodes, collectively shown as a single block in Figure 1, include a base station system, a network switching system and a short message service center. The mobile station T includes but is not limited to a mobile phone. The base station system provides the radio inter-connection from the mobile station T to the network switching system. The network switching system interconnects the GSM network and the PSTN. The network switching system includes other nodes, such as a Mobile Services Switching Centre (MSC), a Home Location Register (HLR) and a Visitor Location Register (VLR) (all not individually shown in Figure 1 but as part of the single block "GSM Network Nodes"). These location registers are database-oriented processing nodes are for managing subscriber data and keeping track of a mobile subscriber's location, more specifically mobile station's location, as it roams around the GSM network RN1 and possibly other GSM networks (not shown). That is, the location registers keep track of which MSC and VLR the mobile subscriber is being currently served.

Servers S1, S2 and S3, also part of the communication network are used for respectively transferring the end-user U's unique identity, and using it for spamming messages to this end-user U in return.

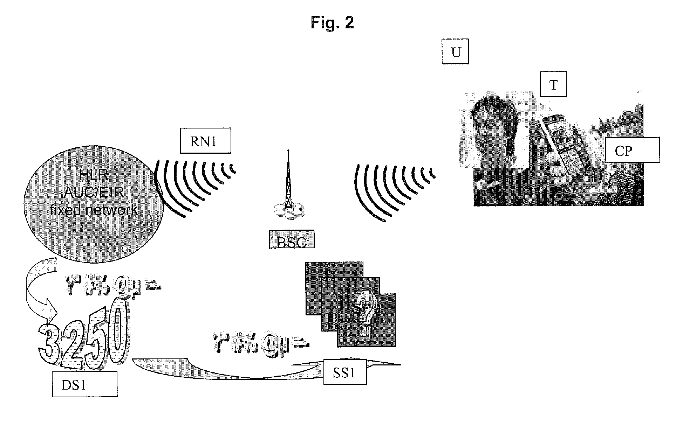

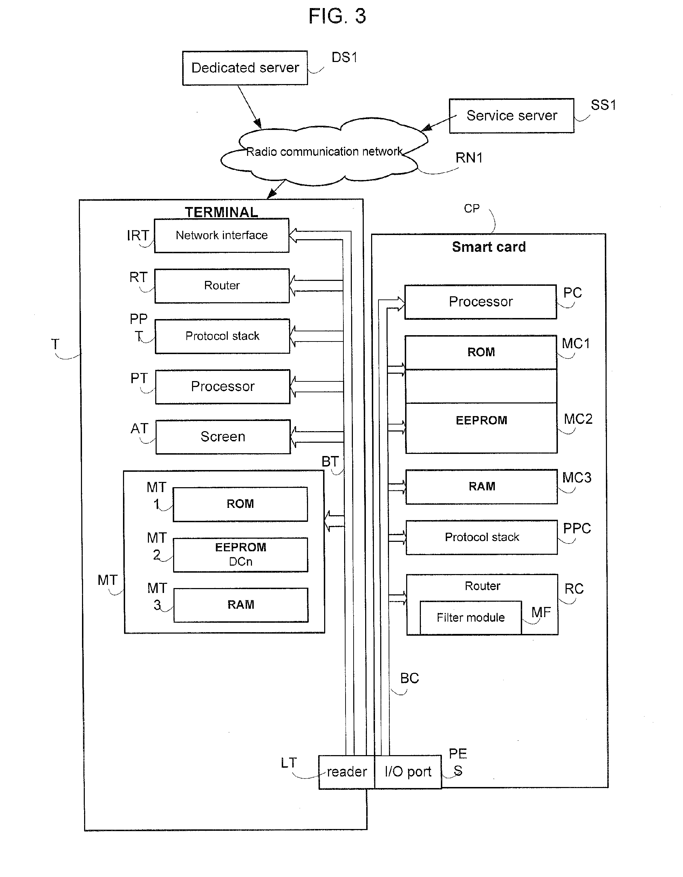

Referring to Figure 2, the mobile station T includes a mobile equipment or terminal T, and a subscriber identity module (SIM) when used in a GSM network. The SIM, referenced CP on the figure, is programmed with a unique International Mobile Subscriber ldentity (IMSI). Stored on the SIM CP is the end-user's U unique identity. Referring to Figure 3, the mobile device T includes a processor PT and its associated memory MT. The mobile device is connected to the removable SIM CP via electrical contacts or using a contactless link. The SIM CP includes a SIM processor PC and a SIM memory MC1, MC2 and MC3. The SIM CP is used for the storage and retrieval of data items by the processor PT of the mobile terminal T. The command set, data file structure and data coding used for data communicated via the interface between the mobile terminal processor PT and the SIM processor PC are specified in the 3GPP technical specification 11.11 or ETSI Technical Specification 100.977.

Applications (not shown) are stored on the SIM CP, more specifically in the SIM memory MC1, MC2 and/or MC3. These applications allow interactions between the SIM CP and the mobile terminal T. These applications may be supported by the SIM application toolkit or a similar platform. The applications may be developed using a number of computer programming languages, such as C, Java™ or any other proprietary programming language. Typical applications include downloading data and "events" to the SIM CP. Data records are stored in what is known as elementary files in the SIM memory MC1, MC2 and/or MC3. The applications may be stored in the SIM CP when the SIM CP is personalized in the factory. Alternatively, the applications may be loaded in the SIM CP via an over-the-air (OTA) process after the SIM CP is deployed. Server SS1 shown in figure 2 is a server the end-user wants to send a message to and in some cases to receive a response from. Server DS1 of figure 2 is a dedicated server in charge of scrambling the end-user's U unique identity, using an encoding algorithm with a specific key or using a correspondence table or any kind of databases. Services servers SS1 then cannot any more use the end-user's U unique identity to spam the end-user on his mobile device T. When asked by the subscriber, the contact number which is presented to the services provider ( as example a ring tones...) is a one time mask of the real one, with no possibility for the service provider to call you back by using it.

According to one aspect of the invention, there is provided a method that is implemented on a device in order to scramble the device telephone number so that the fraudulent server cannot know the end-user's phone number and then use it for fraud. The method uses a device allowing the end-user to, automatically or not, scramble the device telephone number.

The present embodiment relies on the fact that a network with servers exists between the end-user device and the server of the service provider the end-user wants to join.

According to another aspect of the invention, there is provided a device that includes a way of scrambling the end-user's identity in order to keep his anonymity.

When the end-user U decides to send an SMS to a service provider SS1, waiting from an answer from this service provider SS1 and the end-user do not want this service provider to be able to spam him, as described on figure 2, the following steps are performed which allow the identity of the end-user to be hided to the service provider server SS1 : First, the message leaves the end-user device T and CP. Then, the message is sent to the telecommunication operator network of the end-user RN1. Then, in the dedicated server DS1, part of the telecommunication operator infrastructure, the end-user identity, the telephone number of the end-user in our example, is scrambled into another unique number, called here the encoded identifier. Then, the message is then sent to the service provider SS1 that cannot store, or even recognize the end-user phone number , this number not being sent to the service provider SS1, but can send an answer to DS1, using the encoded identifier as a unique identifier. Then the dedicated server DS1 receives the answer from SS1, changes in reverse the encoded identifier to the end-user phone number and sends the answer back to the end user U via the telecommunication operator network of the end-user RN1 Finally, the end-user U can access to the answer on his mobile terminal T and SIM CP.

The end-user identity used is a unique and single data a telecommunication network used to recognize an end point of the network, stored into the personal token (a SIM card in our example). The scrambled identifier is also a unique number so that the network operator can make the link between the end-user and this identifier. As an example, scrambling can be based on the known technology OTP (One Time Password) or it can use a dedicated algorithm with a secret key so that only one end-user identity corresponds to only one identifier. This unique scrambled identifier can be generated using known technologies such as OTP (One Time Password), providing a unique number based on current time and a second input. As an example, the second input may be one of the end-user's phone numbers in our example. In such cases, scrambling is performed by encoding.

The scrambling can be based on a table (not shown) in one embodiment that can be a database or any other corresponding table or the same, in witch all the end-users 'unique identities (could be one of the end-user's phone numbers) and the corresponding unique scrambled identifiers are stored.

In the preferred embodiment this invention is implemented into the dedicated server DS1 but it can also be implemented into the mobile device of the end-user. This mobile station being made of a terminal and a subscriber identification module, the invention can be implemented in the subscriber identification module or in the mobile terminal or on both together. In this case, the dedicated server DS1 needs to know a corresponding algorithm used and share a same secret key as those used for encoding the phone number inside the mobile station so that this server can route the message and its optional response in a correct way.

In another embodiment, the solution implemented for preventing from spam can be automatically activated or even always activated.

According to the present embodiment, the invention can be partially or totally implemented into the dedicated server DS1 or distributed among the end-user's device T, the smart token CP and the dedicated server DS1.

The presently described embodiment of the invention includes scrambling the end-user's identity so that an application server SS1 cannot find back the said identity and then cannot spam the end-user U and/or sell his identity. The present embodiment further includes using an intermediary server DS1 in charge of the scrambling of the end-user's identity for the purpose of saving anonymity of the said end-user U. Advantageously, the dedicated server DS1 is part of the mobile network infrastructure RN1 so that the end-user U can rely on the management of his privacy made by the telecom operator in charge of this network RN 1.

As another example, this invention can be used into a corporate infrastructure.

When triggered on demand by OTA (over-the-air) way, the method includes the following steps:
- Following policy rules or anomaly detection, the operator can trigger an identity check of the user.
- For identity check, the operator sends an OTA command to the end-user's device. Then as an example, a message is prompted on the screen of the end-user's device asking him either to present the biometrics data (e.g. fingerprint) or to answer the question identified during the enrolment phase at the vendor desk. If the biometrics data/user answer is correct then the user is allowed to access the service. If the check is unsuccessful the service access is refused.

In case of OTA activation/deactivation for a systematic impersonality, the operator can activate by OTA a systematic check and launch for a dedicated application (service) or any application on the terminal.

An advantage of this invention is that it's a tool given to the end-user to manage the direct control of his privacy concerns.

It can be made transparently without any action from the end-user: Following policy rules or anomaly detection, the operator can trigger an automatic anonymity of the user identity to the service provider. Policy rules can be as example black lists in which malicious addresses (of sites that are considered dangerous) are stores or such policy rules can also allow the prohibition of access to trading or sensible sites. Anomaly detection can be Trojan horses detection, cookies detection or even executable program detection. In another embodiment, the end-user can configure some parameters such as the type of addresses he wants to apply the invention to. In another implementation, the end-user can manually select if he wants or not to use the invention, this for every message.

For identity check, the operator can also send an OTA (Over The Air) command to the terminal such as an SMS. Then a message is prompted on the screen of the terminal asking the user either to directly access the service or to ask for an anonymous phone number.

The operator can in another embodiment activate using an OTA message a systematic activation corresponding to the end-user provided privacy profile for a dedicated application (service) or any application based on permanent or special end-user request.

The end-users' devices include, but are not limited to, a mobile phone, or a VolP (voice over Internet Protocol) softphone, or a personal digital assistant (PDA), or the like. Accordingly, these devices operate on networks including a mobile communication network, an Internet protocol (IP) network, etc. The communication session may be a voice or a data communication session. Examples of a data communication session include, but are not limited to, SMS (short message services), MMS (multimedia services), audio streaming, video streaming, video conferencing, VolP (voice over Internet Protocol), etc.

In some embodiments, the method comprises the following:
Automatically activating a systematic check for any application or for a dedicated application on the end-user's mobile device.
According to another embodiment, the following step may be performed: manually activating a check for a dedicated application on the end-user's mobile device.

According to yet another aspect of the invention there is provided a personal token CP that is linked to (hardware connection or via a Contacless link) a terminal T and that includes the same features as the device mentioned above. The personal token may be a smart card, a mass memory card, a universal serial bus (USB) key, a multimedia card (MMC), a secure-digital (SD) card, a universal integrated circuit card (UICC), or any token that supports the means described above. The personal token may for example be a subscriber identity module (SIM) when connected to a device associated with a Global System for Mobile communications (GSM)/General Packet Radio Service (GPRS) network. Such personal token may be for example a Universal Subscriber Identity Module (USIM), a Removable User Identity Module (USIM), an IP Subscriber Identity Module (ISIM), an Extensible Authentication Protocol-Subscriber Identity Module (EAP-SIM) when used in devices that are complaint with the third generation telecommunications (3GPP), UMTS, UTRAN, CDMA 2000 (3GPP2) standards. The personal token CP can be as well a piece of software having the same functions than a physical token.

According to another aspect of the invention, there is provided a software program having instructions executable by a processor of an end-user's device, or of a personal token or of a dedicated server, this server being or not part of the mobile radio communication network. The software is for implementing a method for instructing the personal token, and/or the device, and /or the dedicated server to make sure the dedicated server will scramble the mobile phone number.

## Claims

1. An end-user identifying method to an application server (SS1) in a mobile communication network including the step which consists in using an entity for sending an identifier to the application server (SS1) which identifier being based on the identity of a mobile end-user (U), method **characterized in that** it includes the step which consists in the said entity scrambling the identity into a scrambled identifier and sending this scrambled identifier to the application server (SS1).

2. A method according to Claim 1, **characterized in that** the said scrambling entity is an intermediary server (DS1) placed on the communication path (RN1) between a mobile station (T, CP) of the end-user and the application server (SS1).

3. A method according to anyone of claims 1 to 2, **characterized in that** it comprises the step which consists in proposing to the said end-user (U) to manually activate the scrambling entity.

4. A method according to anyone .of claims 1 to 3, **characterized in that** the said scrambling entity is inside a mobile station of the end-user (T, CP).

5. A method according to Claim 4, **characterized in that** the mobile station (T, CP) includes a personal token (CP) and the scrambling entity is inside the personal token (CP).

6. A telecommunication entity in a mobile telecommunication network which forwards a message generated from an end-user (U) mobile station (T, CP) to an application server (SS1) in a mobile telecommunication network (RN1), said entity taking account of the end-user identity and sending an identifier of the mobile end-user to the application server (SS1), **characterised in that** the said entity stores and runs a program for scrambling the identity into a scrambled identifier before sending such scrambled identifier to the application server (SS1).

7. The telecommunication entity according to claim 6 **characterised in that** it is an intermediary server (DS1) placed on a communication path (RN1), in between the mobile station (T, CP) and the application server (SS1).

8. The telecommunication entity according to claim 6 **characterised in that** it is a personal token (CP) in the end-user (U) mobile station (T).

9. A software program having instructions executable by a processor of a telecommunication entity, which instructions control such processor into sending an identifier to an application server (SS1) which identifier being based on the identity of a mobile end-user (U), **characterized in that** the instructions control the processor into scrambling the identity into a scrambled identifier and sending this scrambled identifier to the application server (SS1).
